# EUROPÄISCHE PATENTSCHRIFT

(11) **EP 1 643 609 B1**
(45) Veröffentlichungstag und Bekanntmachung des Hinweises auf die Patenterteilung: **17.09.2008**
(21) Anmeldenummer: 05021479.0
(22) Anmeldetag: 30.09.2005
(51) Int. Cl.: H02J 3/38, H02J 3/18

(54) **Windenergieanlage mit Umrichtersteuerung und Verfahren zum Betrieb**
Wind energy installation with converter control and method of operation
Installation éolienne avec commande de convertisseur et procédé d'opération

(30) Priorität: 01.10.2004 DE 102004048339
(43) Veröffentlichungstag der Anmeldung: 05.04.2006
(73) Patentinhaber: REpower Systems AG, 22335 Hamburg (DE)
(72) Erfinder: Fortmann, Jens, 13156 Berlin (DE); Letas, Heinz-Hermann, Dr., 23701 Süsel (DE)
(74) Vertreter: Riesenberg, Axel

(56) Entgegenhaltungen:
- WO-A1-01/73518
- US-B1- 6 784 564
- TAPIA A ET AL: "Reactive power control of wind farms for voltage control applications" RENEWABLE ENERGY, PERGAMON PRESS, OXFORD, GB, Bd. 29, Nr. 3, März 2004 (2004-03), Seiten 377-392, XP004473191 ISSN: 0960-1481
- LEDESMA P ET AL: "Contribution of variable-speed wind turbines to voltage control" WIND ENGINEERING, BRENTWOOD, GB, Bd. 26, Nr. 6, 2002, Seiten 347-358, XP002360684 ISSN: 0309-524X

## Beschreibung

Die Erfindung betrifft eine Windenergieanlage umfassend einen Rotor, einen dadurch angetriebenen Generator mit einem Umrichter zur Einspeisung elektrischer Energie in ein Versorgungsnetz über einen Verknüpfungspunkt und einer Steuereinrichtung, wobei die Steuereinrichtung eine Umrichtersteuerung aufweist.

Windenergieanlagen werden in immer leistungsstärkeren Ausführungen gebaut. Sie werden teilweise einzeln und teilweise in Gruppen zusammengefasst in Form von sogenannten Windparks aufgestellt. Das geschieht bevorzugt an Standorten mit hohem Windenergieangebot, wie auf Erhebungen (Hügel oder Berge), in ausgedehntem Flachland, an Küsten oder auch offshore im Meer. Diesen Standorten ist gemeinsam, dass sie in der Regel in nur dünn besiedelten Gegenden liegen. Eine dünne Besiedlung bedeutet meistens, dass das elektrische Versorgungsnetz nur eine geringe Kapazität aufweist. Für die Entscheidung, ob das Versorgungsnetz noch eine Windenergieanlage (oder auch mehrere Windenergieanlagen) aufnehmen kann, ist der Aspekt der Netzverträglichkeit der Windenergieanlage von hoher Bedeutung, und zwar gerade dann, wenn eine verhältnismäßig leistungsstarke Anlage an einem aus der Warte des elektrischen Versorgungsnetzes abgelegenen Standort betrieben werden soll.

Ein wichtiges Kriterium ist hierbei für den sicheren Betrieb am elektrischen Versorgungsnetz die Spannungsstabilität. Das gilt nicht nur bei hohen Einspeiseleistungen, wie sie durch moderne einzelne oder vor allem auch durch in Gruppen zusammengefasste Windenergieanlagen erreicht werden, sondern auch bei einem Anschluss an Hoch- und Höchstspannungsnetze als elektrische Versorgungsnetze. Hier spielt der Aspekt des Spannungsniveaus des elektrischen Versorgungsnetzes eine besondere Rolle. Auf Grund der vermaschten Struktur gerade des Hoch- und Höchstspannungsnetzes können durch Veränderungen des Spannungsniveaus an einzelnen Punkten Beeinflussungen vorgenommen werden, über welche Strecken die elektrische Leistung primär fließt. Über das Spannungsniveau kann eine Steuerung des elektrischen Lastflusses in dem vermaschten Netz erreicht werden. Zur Stützung eines gewünschten Spannungsniveaus ist es aus offenkundiger Vorbenutzung bekannt, insbesondere kapazitive Blindleistung in das elektrische Versorgungsnetz einzuspeisen. Weitere wichtige Parameter in Bezug auf die Gewährleistung einer hohen Netzverträglichkeit sind insbesondere die Strombelastbarkeit und Netzflicker.

Aus dem Betrieb von mehreren Windenergieanlagen, die mittels eines gemeinsamen Leitrechners zu einem Windpark zusammengefasst sind, ist es bekannt, die komplexe Leistung an einem Verknüpfungspunkt mit dem elektrischen Versorgungsnetz zu messen und mit Sollvorgaben in Bezug auf den Leistungsfaktor zu vergleichen. Der Leitrechner (Parkmaster) bestimmt daraus Blindleistungssollwerte entweder für die einzelnen Windenergieanlage oder aber als gemeinsamen Richtwert für alle Windenergieanlagen. Im letztgenannten Fall weist jede Windenergieanlage eine eigene Leistungssteuerung auf, an welcher der gemeinsame Richtwert als Eingangsgröße anliegt. Ein entsprechendes System ist in WO-A-01/73518 beschrieben. Im erstgenannten Fall setzen die einzelnen Windenergieanlagen die Vorgaben direkt um, indem sie mehr oder weniger Blindleistung bereitstellen. Es ist ein solcher Regler vorgeschlagen worden, der in Abhängigkeit von einer vorgegebenen Blindleistung ein Spannungskommandosignal bestimmt (EP-A-1 512 869). Durch die Veränderung der Blindleistung ändern sich aber auch die Spannungen und Ströme an den Leitungen und Übertragungen des Windparks. Es ist zwar bekannt, an der einzelnen Windenergieanlage einen Vergleich der abgegebenen Spannung mit der Sollspannung durchzuführen (WO-A-01/20745). Aber dennoch kann es insbesondere bei einzelnen Windenergieanlagen, die im Windpark am Ende einer langen Leitung liegen, zu unerwünschten Spannungsanstiegen kommen. Dadurch können Instabilitäten hervorgerufen werden. Ein unerwünschtes Abschalten einzelner Windenergieanlagen oder gar Schäden an Umrichtern können die Konsequenzen sein. Ein solches Abschalten von Windenergieanlagen, selbst bevor es zu Schäden an Umrichtern kommt, ist aus zweierlei Gründen nicht erwünscht. Zum einen verringert sich dadurch der von der Windenergieanlage erbrachte Ertrag, zum anderen geht durch das Abschalten jede Unterstützung des elektrischen Versorgungsnetzes durch die betroffene Windenergieanlage verloren.

Der Erfindung liegt die Aufgabe zugrunde, eine Windenergieanlage der eingangs genannten Art und ein Betriebsverfahren derart zu verbessern, dass ein besseres Verhalten am Netz erreicht wird.

Die Lösung gemäß der Erfindung liegt in den Merkmalen der unabhängigen Ansprüche. Vorteilhafte Weiterbildungen sind Gegenstand der abhängigen Ansprüche.

Erfindungsgemäß ist bei einer Windenergieanlage umfassend einen Rotor, einen dadurch angetriebenen Generator, einem Umrichter zur Einspeisung elektrischer Energie in ein Netz über einen Verknüpfungspunkt und einer Steuereinrichtung, wobei die Steuereinrichtung eine Umrichtersteuerung aufweist, vorgesehen, dass die Steuereinrichtung einen Eingangsanschluss für einen Sollwert der abzugebenden Spannung (Usoll) aufweist, wobei ein Zusatzregler vorgesehen ist, an dessen Eingang der Sollwert der abzugebenden Spannung (Usoll) angelegt ist und an dessen Ausgang Blindleistungssollwerte ausgegeben und an die Umrichtersteuerung angelegt sind, wobei die tatsächlich abgegebene Spannung der Windenergieanlage mit Hilfe eines Sensors erfasst wird und der Zusatzregler dazu ausgebildet ist, aus der Differenz des Sollwerts der abzugebenden Spannung (Usoll)und der tatsächlich abgegebenen Spannung der Windenergieanlage Blindleistungssollwerte für die Windenergieanlage zu berechnen.

Die Erfindung beruht auf den Gedanken, die Steuerungseinrichtung bei Windenergieanlage derart auszuführen, dass nicht mehr wie im Stand der Technik der zu liefernde Leistungskoeffizient oder die von der Windenergieanlage bereitzustellende kapazitive bzw. induktive Blindleistung direkt der Umrichtersteuerung vorgegeben ist, sondern dass statt dessen der Vorgabewert für die abzugebende Spannung Usoll verändert wird. Die Sollspannung wird so eingestellt, dass sich als in Folge am Verknüpfungspunkt zwischen Windenergieanlage und elektrischem Versorgungsnetz der gewünschte Leistungskoeffizient einstellt. Dieser gewünschte Leistungskoeffizient am Netz ist zu unterscheiden von der Vorgabe eines Blindleistungswertes oder eines bestimmten Leistungsfaktors an die Umrichtersteuerung. Letzterer wird erfindungsgemäß von dem Zusatzregler auf Basis der angelegten Sollspannung ermittelt. Der Kern der Erfindung liegt darin, dass der Umrichtersteuerung nicht mehr direkt der gewünschte Leistungskoeffizient am Verknüpfungspunkt vorgegeben wird, sondern dass statt dessen nur ein Sollwert für die gewünschte Ausgangsspannung an die Steuereinrichtung der Windenergieanlage angelegt wird und es dieser überlassen ist, basierend darauf entsprechend Wirk-/Blindleistungsvorgaben zu ermitteln und für ihre Umsetzung durch entsprechende Ansteuerung des Umrichters zu sorgen, so dass sich im Ergebnis am Verknüpfungspunkt der gewünschte Leistungskoeffizient ergibt.

Dank der Erfindung werden beachtliche Vorteile realisiert: Erstens wird eine Kontrolle der Spannung an der Windenergieanlage ausgeübt. Die maximal mögliche Endleistung der Windenergieanlage kann so zur Gewährleistung der Netzstabilität abgerufen werden, ohne dass Gefahr besteht, Betriebsinstabilitäten oder gar Beschädigungen der Windenergieanlagen und ihrer Komponenten hervorzurufen, da schädliche Spannungsabweichungen dank der Erfindung nicht auftreten. Dies ermöglicht es, Sicherheitsabschläge nicht mehr oder nur noch in erheblich verringertem Umfang vorzusehen. Die Ausnutzung und des Betriebsverhalten der Windenergieanlage verbessern sich.

Außerdem tritt die bei der konventionellen Regelung von Windenergieanlagen gegebene Problematik nicht mehr auf, dass bei impulsartigen Spannungsänderungen im Netz (Spikes) zwar ein neuer Leistungsfaktor berechnet werden kann, aber nicht schnell genug vom Umrichter umgesetzt werden kann, so dass dieser noch mit dem alten Leistungsfaktor versucht, den Spike nachzufahren. Dank der Erfindung verhalten sich auch bei derart schnellen Vorgängen die einzelnen Windenergieanlagen im gewünschten Sinne, d. h. sie bleiben bei den eingestellten Blindleistungssollwerten.

Dadurch dass kein bestimmter Sollwert für den Leistungsfaktor vorgegeben wird, sondern eine Sollspannung, ist es dem Zusatzregler der Windenergieanlage damit ermöglicht, das jeweils richtige Verhältnis von Wirk- zu Blindleistung selbständig einzustellen. Das hat Vorzüge hinsichtlich der Robustheit der Windenergieanlage gegenüber Störungen, insbesondere transient auftretenden kurzen Störungen. Die Erfindung vereint damit Vorteile bezüglich robustem Verhalten einerseits und guter Regelbarkeit und schneller Reaktion andererseits.

Nachfolgend seien einige verwendete Begriffe erläutert:

Unter einem Generator wird eine Maschine verstanden, die mechanische Energie in elektrische Energie umwandelt. Der Begriff umfasst sowohl Gleichstrom- wie auch ein- oder mehrphasige Wechselstrommaschinen. Dabei kann es sich um Synchron- oder Asynchronmaschinen handeln, die einfach oder doppelt gespeist sind. An dem Generator ist der Umrichter angeschlossen, der als Vollumrichter oder als Teilumrichter ausgeführt sein kann. Die Bauart des Umrichters ist an sich beliebig, insbesondere kann er als Direktumrichter oder als Zwischenkreisumrichter ausgeführt sein.

Der Begriff des Leistungsfaktors ist weit zu verstehen und umfasst all solche Angaben, die ein Verhältnis zwischen Wirk- und Blindleistung ausdrücken. Es fällt also nicht nur der Leistungsfaktor cos ϕ im engeren Sinn darunter, sondern auch andere Größen, die das Winkelverhältnis zwischen Strom und Spannung charakterisieren, wie z. B. der Winkel ϕ selbst, sin ϕ oder tan ϕ.

Vorzugsweise weist der Zusatzregler eine mehrkanalige Reglerstruktur auf. Dies ermöglicht es, Regelungsvorgänge unterschiedlicher Dynamik zu kombinieren. So kann eine schnelle Reaktion auf Störgrößen erfolgen, während die Anpassung an den gewünschten Sollwert langsam mit verringerter Dynamik erfolgt. Zweckmäßigerweise ist dazu ein schneller Kanal mit einem Hochpass und ein langsamer Kanal mit einem Tiefpass vorgesehen. Der schnelle Kanal ermöglicht es, auf Störungen, wie Spannungstransienten, mit hoher Dynamik zu reagieren. So kann bspw. bei kurzfristigen Spannungsschwankungen schnell Blindleistung zur Verfügung gestellt werden. Der langsame Kanal hingegen ermöglicht es, die Windenergieanlage gemäß einem von außen (bspw. vom Netzbetreiber oder von einem Parkmaster) vorgegebenen Blindleistungswert zu regeln. Er gewährleistet die stationäre Genauigkeit.

Vorzugsweise ist dazu im langsamen Kanal ein Spannungsstatikmodul vorgesehen. Damit ist es ermöglicht, anhand eines Sollspannungswerts ein Maß für die einzuspeisende Blindleistung zu gewinnen.

Grundsätzlich kann die Einspeisung der von der Windenergieanlage erzeugten elektrischen Energie an einem Verknüpfungspunkt erfolgen, der auf Mittel- oder Hochspannungsniveau liegt. Vorzugsweise ist im letzteren Fall die Windenergieanlage über einen Hochspannungstransformator angekoppelt, an dem eine Messeinrichtung für die tatsächliche Hochspannung vorgesehen ist. Die Anbindung der Windenergieanlage an das Hochspannungsnetz ist insbesondere bei hoher installierter Leistung von Vorteil. Allerdings hat sie den Nachteil, dass Hochspannungsleitungen sich elektrisch anders verhalten als Mittelspannungsleitungen, und insbesondere auf Grund ihrer nicht zu vernachlässigenden Kapazität eine sogenannte natürliche Leistung aufweisen, bei der sich ein optimaler Betrieb ergibt. Bei Abweichung von der natürlichen Leistung muss entsprechend mit Blindleistung kompensiert werden. Es ist günstig, wenn zu diesem Zweck die Messstelle hochspannungsseitig des Hochspannungstransformators angeordnet ist. Jedoch wird dies aufwendige und teure Hochspannungs-/Messeinrichtungen bedingen. Vorzugsweise ist die Messeinrichtung so ausgeführt, dass sie einen Sensor windenergieanlagenseitig des Hochspannungstransformators aufweist und eine Berechnungseinrichtung vorgesehen ist, die zur Ermittlung der Spannung am Verknüpfungspunkt ausgebildet ist. Damit ist es ermöglicht, sofern die Übertragungseigenschaften des Hochspannungstransformators der dazwischen liegenden Verbindungsleitungen bekannt sind, preisgünstigere Sensoren für den Mittelspannungsbereich zu verwenden.

Es hat sich bewährt, für den Zusatzregler eine Begrenzungseinrichtung für die Sollspannung vorzusehen. Dadurch wird erreicht, dass es nicht durch zu hohe Sollspannungen zu Schäden am Generator oder am Umrichter kommt. Das ist insbesondere dann von Bedeutung, wenn die Windenergieanlage über eine verhältnismäßig lange Leitung mit dem Verknüpfungspunkt verbunden ist. Liegt die Messstelle nahe des Verknüpfungspunktes, so kann es wegen des bei größeren Längen nicht zu vernachlässigenden komplexen Widerstands der Leitung dazu kommen, dass das Spannungsniveau einer Windenergieanlage auf einem anderen, insbesondere höheren Wert liegt. Ohne eine Begrenzung könnte es leicht zu Schäden kommen.

Gemäß einer weiteren vorteilhaften Ausgestaltung der Erfindung ist ein mit dem Zusatzregler zusammenwirkender überlagerter Regelkreis vorgesehen, der dazu ausgebildet ist, zur Einstellung eines Leistungskoeffizienten der elektrischen Energie, die von mehreren Windenergieanlagen in das Versorgungsnetz abgegeben wird, eine Sollspannung für die einzelne Windenergieanlage zu ermitteln. Damit wird erreicht, dass eine übergeordnete Instanz, wie bspw. der Parkmaster, zur Einhaltung eines bestimmten Leistungskoeffizienten einer Gruppe von Windenergieanlagen gegenüber dem Versorgungsnetz den angeschlossenen Windenergieanlagen jeweils eine Sollspannung vorgibt. Diese ist jeweils so berechnet, dass sich insgesamt ein gewünschter globaler Leistungskoeffizient, wie von der übergeordneten Instanz vorgegeben, gegenüber dem Versorgungsnetz einstellt. Die von dem überlagerten Regelkreis berechnete Sollspannung wird als Signal ausgegeben und an die Zusatzregler der einzelnen Windenergieanlagen übermittelt. Basierend auf dieser Sollspannung ermittelt dann der Zusatzregler der einzelnen Windenergieanlage selbständig die jeweiligen Blindleistungssollwerte für die ihm zugeordneten Windenergieanlage. Generator und Umrichter werden so betrieben, dass Blind- und Wirkleistung entsprechend den so gewonnenen Vorgaben erzeugt werden. Die sich schließlich ergebende Ausgangsspannung wird gemessen und an den Zusatzregler in einer geschlossenen Regelschleife zurückgeführt. Damit wird erreicht, dass sich an der Windenergieanlage die gewünschte Sollspannung einstellt, und als Konsequenz global über die Gruppe der Windenergieanlagen gesehen.

Die Erfindung bezieht sich ferner auf ein entsprechendes Verfahren zum Betrieb einer Windenergieanlage. Zur näheren Beschreibung wird auf obige Ausführung verwiesen.

Die Erfindung wird nachfolgend unter Bezugnahme auf die Zeichnung näher erläutert, in der vorteilhafte Ausführungsbeispiele dargestellt sind. Es zeigen:
- Fig. 1: eine schematische Darstellung eines Ausführungsbeispiels einer erfindungsgemäßen Windenergieanlage;
- Fig. 2: eine schematische Darstellung eines zweiten Ausführungsbeispiels mit einer Gruppe von Windenergieanlagen;
- Fig. 3: eine schematische Darstellung einer Steuereinrichtung der Windenergieanlage gemäß dem ersten Ausführungsbeispiel; und
- Fig. 4: eine schematische Darstellung des Zusatzreglers der in Fig. 3 dargestellten Steuereinrichtung.

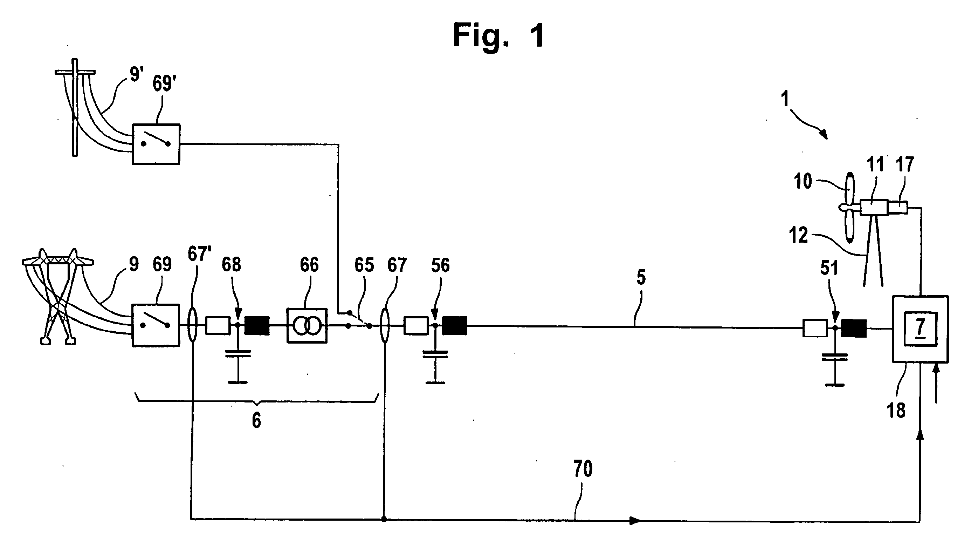

In Fig. 1 ist ein Ausführungsbeispiel für eine erfindungsgemäße Windenergieanlage und ihr Anschluss an ein Versorgungsnetz dargestellt.

Der Aufbau der Windenergieanlage 1 wird nachfolgend kurz erläutert. Die Windenergieanlage 1 umfasst einen Rotor 10, der drehbar an einem Maschinengehäuse 11 an der Spitze eines Turms 12 angeordnet ist. Der Rotor 10 treibt einen Generator (nicht dargestellt) an. Es handelt sich vorzugsweise um einen doppelt gespeisten Asynchrongenerator, jedoch sind auch andere Generatorbauarten möglich. Mit dem Generator ist ein Umrichter 17 verbunden. Er wandelt die von dem Generator gelieferte elektrische Leistung in einen dreiphasigen Drehstrom mit fester Frequenz (Netzfrequenz) um. Der Betrieb der Windenergieanlage ist kontrolliert von einer Steuereinrichtung 18. Sie wirkt über geeignete (nicht dargestellte) Steuerleitungen auf die einzelne Komponenten der Windenergieanlage 1 ein. Weiter ist an der Windenergieanlage 1 ein Transformator (nicht dargestellt) vorgesehen, der die von dem Umrichter 17 ausgegebene Spannung auf ein höheres Niveau transformiert.

Die Windenergieanlage 1 ist an ein elektrisches Versorgungsnetz 9 angeschlossen. Bei dem elektrischen Versorgungsnetz 9 handelt es sich vorzugsweise um ein Hochspannungsnetz. Es kann aber auch vorgesehen sein, einen Anschluss mit einem Mittelspannungsnetz 9' anstatt mit dem Hochspannungsnetz 9 herzustellen. Nachfolgend wird der Anschluss an das Hochspannungsnetz 9 näher beschrieben. Zur Verbindung der Windenergieanlage 1 mit dem Hochspannungsnetz 9 sind eine Verbindungsleitung 5, eine Verknüpfungsstrecke 6 und ein Verknüpfungspunkt 69 vorgesehen. Die Verbindungsleitung 5 kann eine beträchtliche Länge und damit nicht zu vernachlässigende Widerstände, Induktivitäten und Kapazitäten aufweisen. Diese sind im Ersatzschaltbild durch Elemente 51 und 56 berücksichtigt. Die Spannung am Ende der Verbindungsleitung 5 und zu Beginn der Verknüpfungsstrecke 6 wird mittels eines Messaufnehmers 67 gemessen. Bei Bedarf kann auch der dort fließende Strom mittels eines weiteren Messaufnehmers ermittelt werden. Weiter ist eine Verzweigungsstelle 65 vorgesehen, die je nach dem gewählten Anschluss der Windenergieanlage 1 an das Hochspannungsnetz 9 oder das Mittelspannungsnetz 9' geschaltet ist. Durch einen durchgezogenen Strich dargestellt ist die Anschaltung an das Hochspannungsnetz 9. Die Verbindungsstrecke 6 zum Hochspannungsnetz 9 umfasst einen Hochspannungstransformator 66 und den Verknüpfungspunkt 69. Deren elektrische Charakteristiken sind durch die Komponenten 68 im Ersatzschaltbild dargestellt. Am Verknüpfungspunkt 69 wird die von der Windenergieanlage 1 erzeugte elektrische Leistung in das Hochspannungsnetz 9 eingespeist. Anstelle des auf Mittelspannungsniveau liegenden Sensors 67 kann auch hochspannungsseitig des Hochspannungstransformators 66 ein Spannungssensor 67' vorgesehen sein. Diese Anordnung bietet den Vorteil einer genaueren Messung des tatsächlich am Verknüpfungspunkt 69 herrschenden Spannungsniveaus. Dem steht aber als Nachteil gegenüber, dass für Hochspannung geeignete Sensoren 67' einen größeren Aufwand erfordern als ein Sensor für Mittelspannung 67. Alternativ ist ein Anschluss über einen Verknüpfungspunkt 69' an das Mittelspannungsnetz 9' vorgesehen. Ein Hochspannungstransformator 66 entfällt bei dieser Variante.

Zur Kontrolle der Windenergieanlage und ihrer in das Versorgungsnetz 9, 9' eingespeisten Leistung ist die Steuereinrichtung 18 vorgesehen. Sie umfasst eine an sich bekannte Betriebsführungseinheit 180 und ferner eine Begrenzungseinrichtung 182, ein Differenzglied 183, einen Zusatzregler 7 sowie eine Umrichtersteuerung 189. An die Betriebsführungseinheit 180 sind in an sich bekannter Weise Mess- und Steuersignale angelegt. Der Umrichter 17 wird von der Umrichtersteuerung 189 gemäß den eingestellten Ansteuersignalen betrieben. Er stellt in an sich bekannter Weise an seinem Ausgang elektrische Wirk- und Blindleistung P bzw. Q bei einer Ausgangsspannung U gemäß den eingestellten Werten bereit und speist sie in die Verbindungsleitung 2 ein. Auf eine nähere Beschreibung kann daher verzichtet werden. An einen Eingang der Begrenzungseinrichtung 182 ist ein Signal für die Sollspannung Usoll angelegt. Die Begrenzungseinrichtung 182 ist dazu ausgebildet, überhöhte Werte der Sollspannung Usoll auf ein noch zulässiges Maß zu begrenzen. Das Signal für die Sollspannung Usoll ist über das Differenzglied 183 an den Zusatzregler 7 angelegt. Er ist dazu ausgebildet, aus dem Signal für die Sollspannung Usoll geeignete Ansteuersignale für die Umrichtersteuerung 189 zu berechnen. Der Aufbau des Zusatzreglers 7 wird weiter unten näher erläutert werden. Die Betriebsführungseinheit 180 gibt in dem dargestellten Ausführungsbeispiel ein Signal für eine Sollwirkleistung an die Umrichtersteuerung 189 aus. Die Ausgangsspannung wird mittels des Sensors 67 gemessen und zu dem Differenzglied 183 zurückgeführt. Eventuelle Abweichungen vom Sollwert Usoll können so ermittelt und ausgeregelt werden.

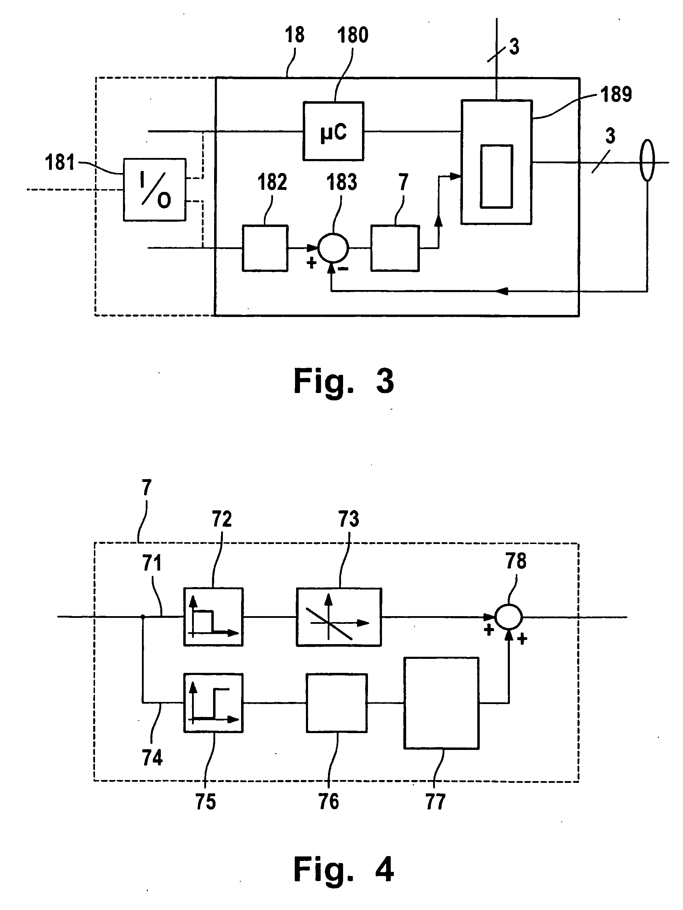

Es wird Bezug genommen auf Fig. 4, in der der Aufbau des Zusatzreglers 7 dargestellt ist. In dem dargestellten Ausführungsbeispiel ist der Zusatzregler 7 als ein zweikanaliger Regler ausgeführt. Er weist einen langsamen Kanal 71 (oben dargestellt) und einen schnellen Kanal 74 (unten dargestellt) auf, die an ihren Ausgängen mit Eingängen eines Summationsglied 78 verbunden sind. In dem langsamen Kanal ist ein Tiefpass 72 und ein Spannungsstatikmodul 73 vorgesehen. Der Tiefpass 72 dient dazu, Vorgänge mit kurzen Zeitkonstanten, d. h. mit hohen Frequenzanteilen, zurückzuweisen und nur solche durchzulassen, die eine verhältnismäßig lange Zeitkonstante aufweisen. Derartige Änderungen der Sollspannung Usoll werden auf das Spannungsstatikmodul 73 geführt. Dabei handelt es sich um ein Kennlinienmodul, das eine vorzugsweise statische Kennlinie zwischen der Sollspannung und der von der Windenergieanlage bereitzustellenden Blindleistung beschreibt. Die Darstellung in dem Kennlinienmodul ist zweckmäßigerweise auf einen Normwert für die Sollspannung normiert, so dass es intern mit Spannungsabweichungen ΔU vom Spannungssollwert Usoll arbeitet. Als Ausgabewert kann die Blindleistung Q oder ein entsprechender Strom iq vorgesehen sein. In dem dargestellten Ausführungsbeispiel ist es die Blindleistung Q. Sie wird auf einen ersten Eingang des Summationsglieds 78 gegeben.

An dem Anfang des schnellen Kanals 74 ist ein Hochpass 75 vorgesehen. Er dient dazu, Vorgänge mit geringen Zeitkonstanten durchzulassen und solche mit langen Zeitkonstanten, d. h. niederfrequenten Anteilen, zurückzuweisen. Bei schnellen Änderungen sind häufig große Amplitudenänderungen, insbesondere beim Auftreten von sogenannten Spikes, zu beobachten. Um zu verhindern, dass es dadurch zu einer Überlastung des nachfolgenden Systems kommt, ist vorzugsweise eine Begrenzung oder eine Totbandeinrichtung vorgesehen. Damit können unerwünschte schnelle Änderungen neutralisiert werden. Dazu ist ein Totbandglied 76 hinter dem Hochpass 75 angeordnet. Hinter dem Totbandglied 76 folgt ein Regler 77. Er ist dazu ausgelegt, höherfrequenten Abweichungen der Sollspannung (insbesondere in Gestalt von Spannungstransienten) entgegenzuwirken und dazu die Vorgaben für die abzugebende Blindleistung entsprechend zu ändern. Dies geschieht, indem der Regler die Blindleistungssollwerte für den Umrichter 17 so verändert, dass je nach Bedarf der Betrieb des Generator/Umrichtersystems mehr oder untererregt erfolgt. Dadurch verändert sich das Verhältnis der vom Generator erzeugten Wirk- und Blindleistung. Die so ermittelten geänderten Vorgaben für die Blindleistung wird auf den anderen Eingang des Summierglieds 78 gegeben. Dessen Ausgang wird in der beschriebenen Weise an die Umrichtersteuerung 189 angelegt.

Um einen geschlossenen Regelkreis zu erhalten, wird als Rückführung mittels des Sensors 67 die tatsächlich sich ergebende Spannung an der Verbindungsstrecke 6 gemessen und über die Leitung 70 zu der Steuereinrichtung 18 und zu dem Zusatzregler 7 zurückgeführt. Damit ist der Regelkreis geschlossen.

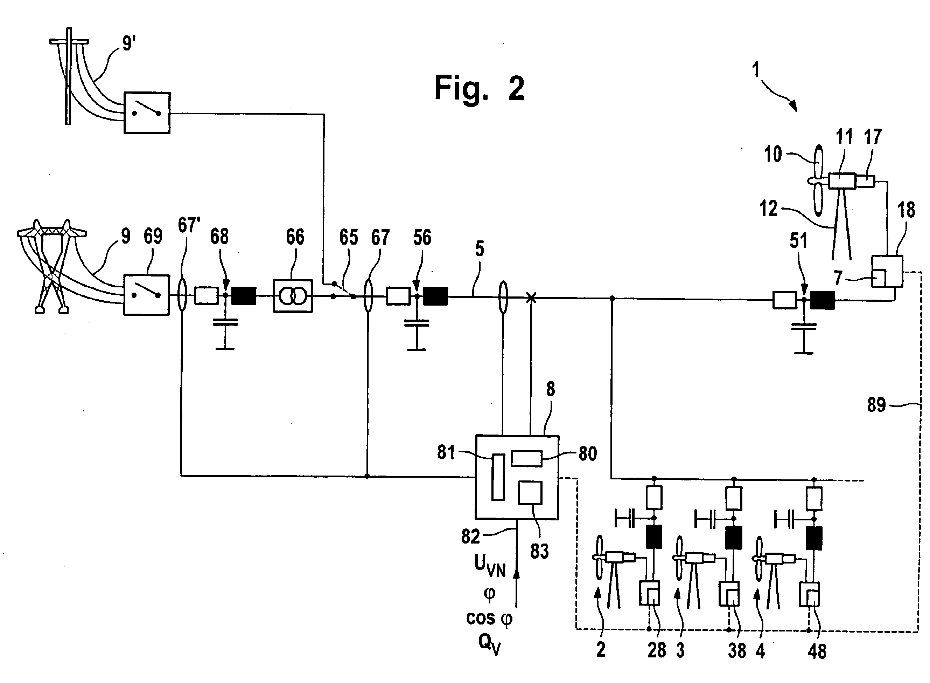

In Fig. 2 ist ein zweites Ausführungsbeispiel dargestellt, das sich von dem in Fig. 1 dargestellten dadurch unterscheidet, dass mehrere Windenergieanlagen 1, 2, 3, 4 vorgesehen sind. Die zusätzlichen Windanlagen 2, 3, 4 entsprechen in ihrem Aufbau der Windenergieanlage 1. Zur Erläuterung wird auf obige Ausführungen verwiesen. Zusätzlich ist ein Parkmaster 8 vorgesehen, der als zentrale übergeordnete Steuerung für die Windenergieanlagen 1 bis 4 ausgebildet ist. Er steht mit Steuereinrichtungen 18, 28, 38, 48 der Windenergieanlagen 1 bis 4 über Kommunikationsleitungen 89 in Verbindung. Einrichtungen zum Messen der abgegebenen Leistung der Windenergieanlagen 1 bis 4 sowie der Sensor 67 zur Messung der Sollspannung Usoll sind an den Parkmaster 8 angeschlossen. Ferner weist der Parkmaster 8 Anschlüsse für externe Vorgaben auf, wie bspw. Vorgaben bezüglich eines globalen Leistungsfaktors (oder Blindleistung). Der Parkmaster 8 ist dazu ausgebildet, aus diesen Werten Vorgaben für die Steuereinrichtungen 18, 28, 38, 48 der einzelnen Windenergieanlagen 1-4 zu bestimmen und über die Kommunikationsleitungen 89 an sie anzulegen. In Bezug auf die Regelung des Leistungsfaktors ist in dem Parkregler 8 vorzugsweise ein Oberregler vorgesehen. Er wirkt mit den Zusatzreglern 7 in den einzelnen Steuereinrichtungen 18, 28, 38, 48 der Windenergieanlagen 1 bis 4 als verteilte Regelung zusammen.

Der Parkmaster ist dazu ausgebildet, eine Leitfunktion für die Windenergieanlage 1-4 auszuüben. Der Parkmaster 8 umfasst einen Leitrechner 80, eine Ein-/Ausgabeeinheit 81 und einen Oberregler 83. In dem Leitrechner 80 sind Leitstrategien für den Windpark implementiert. Zusätzlich ist ein Eingang 82 für Leitanweisungen des Betreibers des Versorgungsnetzes 9 vorgesehen. Das ist in Fig. 2 exemplarisch durch einen Eingang für einen Leistungskoeffizienten (ϕ, cos ϕ) oder Blindleistungswert Q oder ein Netzspannungsvorgabewert U_{VN} dargestellt. Der Oberregler 83 ermittelt aus dem gewünschten Leistungskoeffizienten einen Wert für die Sollspannung (Usoll). Dieser Wert wird über die Ein- /Ausgabeeinrichtung 81 und die Kommunikationsleitungen 89 an die Zusatzregler 7 der Steuereinrichtungen 18, 28, 38, 48 der Windenergieanlagen 1-4 übermittelt. Der Aufbau und die Funktionsweise der Steuereinrichtungen ist vorstehend am Beispiel der Steuereinrichtung 18 erläutert worden; nachfolgend werden durchgeführte Modifizierungen näher erläutert.

Am Beispiel der Windenergieanlage 1 sei erläutert, wie die Steuereinrichtung 18 im Fall eines Betriebs der Windenergieanlage 1 mit anderen Windenergieanlagen 2 bis 4 unter der Kontrolle eines Parkmasters 8 modifiziert ist. Ursprünglich einzeln herausgeführten Anschlüsse für die Betriebsführungseinheit 180 und den Eingang für die Sollspannung an die Begrenzungseinrichtung 182 (mit durchgezogenen Linien im linken Bereich von Fig. 3 dargestellt) sind bei der Installation in einem Windpark nicht einzeln herausgeführt. Stattdessen ist eine gemeinsame Ein-/Aus-gabeeinheit 181 vorgesehen, an deren Eingang die vom Parkmaster 8 kommende Kommunikationsleitung 89 angeschlossen ist. Diese Kommunikationsleitung 89 kann vorzugsweise als ein Feldbus oder ein anderes Datenübertragungsprotokoll ausgebildet sein. Es können herkömmliche Kupferleitungen oder zur Erhöhung der Kommunikationsgeschwindigkeit Lichtwellenleitungen verwendet werden. Über die Kommunikationsleitung 89 und die Ein-/Ausgabeeinheit 181 kommuniziert der Parkmaster mit der Steuereinrichtung 18 der einzelnen Windenergieanlagen 1.

## Patentansprüche

1. Windenergieanlage mit einem Rotor (10), einem dadurch angetriebenen Generator mit einem Umrichter (17) zur Einspeisung elektrischer Energie über einen Verknüpfungspunkt (69) in ein elektrisches Versorgungsnetz (9) und einer Steuereinrichtung (18), wobei die Steuereinrichtung (18) eine Umrichtersteuerung (189) aufweist,
**dadurch gekennzeichnet, dass**
die Steuereinrichtung (18) einen Eingangsanschluss für einen Sollwert der abzugebenden Spannung aufweist, wobei ein Zusatzregler (7) vorgesehen ist, an dessen Eingang der Sollwert der abzugebenden Spannung angelegt ist an dessen Ausgang Blindleistungssollwerte ausgegeben und an die Umrichtersteuerung (189) angelegt sind, wobei die tatsächlich abgegebene Spannung der Windenergieanlage mit Hilfe eines Sensors (67) erfasst wird und der Zusatzregler (7) dazu ausgebildet ist, aus der Differenz des Sollwerts der abzugebenden Spannung (Usoll) und der tatsächlich abgegebenen Spannung der Windenergieanlage Blindleistungssollwerte zu berechnen.

2. Windenergieanlage nach Anspruch 1,
**dadurch gekennzeichnet, dass**
der Zusatzregler (7) eine mehrkanalige Reglerstruktur aufweist.

3. Windenergieanlage nach Anspruch 2,
**dadurch gekennzeichnet, dass**
ein langsamer Kanal (71) mit einem Tiefpass (72) und ein schneller Kanal (74) mit einem Hochpass (75) vorgesehen ist.

4. Windenergieanlage nach Anspruch 3,
**dadurch gekennzeichnet, dass**
der schnelle Kanal (74) eine Transientenunterdrückungseinrichtung (76) aufweist.

5. Windenergieanlage nach Anspruch 3 oder 4,
**dadurch gekennzeichnet, dass**
der langsame Kanal (71) mit einem Spannungsstatikmodul (73) versehen ist, an welches der Sollwert der abzugebenden Spannung anliegt und welches vorzugsweise einen Blindleistungssollwert gemäß einer Kennlinie ausgibt.

6. Windenergieanlage nach einem der vorhergehenden Ansprüche,
**dadurch gekennzeichnet, dass**
der Verknüpfungspunkt (69) an ein Hochspannungsversorgungsnetz (9) angeschlossen ist und mit der Windenergieanlage (1) über einen Hochspannungstransformator (66) verbunden ist, wobei eine Messeinrichtung für die Hochspannung (67') vorgesehen ist.

7. Windenergieanlage nach Anspruch 6,
**dadurch gekennzeichnet, dass**
die Messeinrichtung (67) ausgeführt ist mit einem Sensor (67) an der Windenergieanlagenseite des Hochspannungstransformators (66) und einer Berechnungseinrichtung, die aus Messdaten des Sensors (67) und elektrischen Kenndaten des Hochspannungstransformators (66) und der Verbindungsstrecke (6) die Spannung am Verknüpfungspunkt (69) ermittelt.

8. Windenergieanlage nach einem der vorangehenden Ansprüche,
**dadurch gekennzeichnet, dass**
an dem Zusatzregler (7) eine Begrenzungseinrichtung (182) vorgesehen ist, die zu hohe Sollwerte der abzugebenden Spannung auf einen Maximalwert begrenzt.

9. Windenergieanlage nach einem der vorangehenden Ansprüche,
**dadurch gekennzeichnet, dass**
ein den Zusatzregler überlagernden Regelkreis (88) vorgesehen ist, der dazu ausgebildet ist, zur Einstellung eines globalen Leistungskoeffizienten der in das Versorgungsnetz (9) abgegebenen Leistung einen Sollwert der abzugebenden Spannung (Usoll) zu ermitteln und als Signal über Kommunikationsleitungen (89) an die Windenergieanlage (1) zu übermitteln.

10. Verfahren zum Betreiben einer Windenergieanlage, die einen Rotor (10), einen dadurch angetriebenen Generator mit einem Umrichter (17) zur Einspeisung elektrischer Energie in ein elektrisches Versorgungsnetz (9) über ein Verknüpfungspunkt (69) und eine Steuereinrichtung (18), wobei die Steuereinrichtung (18) ein Umrichtersteuerung (189) aufweist,
**gekennzeichnet durch,**
die Schritte Anlegen eines Sollwerts für die abzugebende Spannung an die Steuereinrichtung (18), Aufschalten des Sollwerts der abzugebenden Spannung (Usoll) auf einen Zusatzregler (7), Berechnen von Blindleistungssollwerten aus der Differenz des Sollwerts der abzugebenden Spannung mit der tatsächlich abgegebenen Spannung der Windenergieanlage (1) und Ausgeben des Blindleistungssollwertes an die Umrichtersteuerung (189).

11. Verfahren nach Anspruch 11,
**gekennzeichnet durch**
Verwenden einer Windenergieanlage gemäß den Ansprüchen 1 bis 10.

## Claims

1. Wind energy installation having a rotor (10), having a generator which is driven by the rotor (10) and has a converter (17) for feeding electrical power via a junction point (69) into an electrical power supply system (9), and having a control device (18), with the control device (18) having a converter controller (189),
**characterized in that**
the control device (18) has an input connection for a nominal value of the voltage to be emitted, with an additional regulator (7) being provided, to whose input the nominal value of the voltage to be emitted is applied and at whose output wattless component nominal values are emitted and are applied to the converter controller (189), with the actually emitted voltage from the wind energy installation being detected with the aid of a sensor (67), and with the additional regulator (7) being designed to calculate the wattless component nominal values from the difference between the nominal value of the voltage (Unom) to be emitted and the voltage actually emitted from the wind energy installation.

2. Wind energy installation according to Claim 1,
**characterized in that**
the additional regulator (7) has a multichannel regulator structure.

3. Wind energy installation according to Claim 2,
**characterized in that**
a slow channel (71) with a low-pass filter (72), and a fast channel (74) with a high-pass filter (75), are provided.

4. Wind energy installation according to Claim 3,
**characterized in that**
the fast channel (74) has a transient suppression device (76).

5. Wind energy installation according to Claim 3 or 4,
**characterized in that**
the slow channel (71) is provided with a voltage static module (73), to which the nominal value of the voltage to be emitted is applied and which preferably emits a wattless component nominal value based on a characteristic.

6. Wind energy installation according to one of the preceding claims,
**characterized in that**
the junction point (69) is connected to a high-voltage power supply system (9) and is connected to the wind energy installation (1) via a high-voltage transformer (66), with a measurement device being provided for the high voltage (67').

7. Wind energy installation according to Claim 6,
**characterized in that**
the measurement device (67) is designed with a sensor (67) on the wind energy installation side of the high-voltage transformer (66), and with a calculation device which determines the voltage at the junction point (69) from measurement data from the sensor (67) and electrical characteristic data for the high-voltage transformer (66) and the connecting path (6).

8. Wind energy installation according to one of the preceding claims,
**characterized in that**
a limiting device (182) is provided for the additional regulator (7) and limits excessively high nominal values of the voltage to be emitted to a maximum value.

9. Wind energy installation according to one of the preceding claims,
**characterized in that**
a control loop (88) is provided, is superimposed on the additional regulator, and is designed to determine a nominal value of the voltage (Unom) to be emitted in order to set a global power coefficient for the power emitted into the power supply system (9), and to transmit this as a signal via connection lines (89) to the wind energy installation (1).

10. Method for operation of a wind energy installation which has a rotor (10), a generator which is driven by the rotor and has a converter (17) for feeding electrical power into an electrical power supply system (9) via a junction point (69), and has a control device (18), with the control device (18) having a converter controller (189),
**characterized by**
the steps of application of a nominal value for the voltage to be emitted to the control device (18), application of the nominal value of the voltage (Unom) to be emitted to an additional regulator (7), calculation of wattless component nominal values from the difference between the nominal value of the voltage to be emitted and the voltage actually emitted from the wind energy installation (1), and emission of the wattless power nominal value to the converter controller (189).

11. Method according to Claim 11,
**characterized by**
use of a wind energy installation according to Claims 1 to 10.

## Revendications

1. Installation à énergie éolienne comprenant un rotor (10), un générateur entraîné par celui-ci avec un convertisseur (17), destinée à l'alimentation en courant électrique d'un réseau de distribution électrique (9) via un point de jonction (69), et un dispositif de commande (18), ledit dispositif de commande (18) comportant une commande de convertisseur (189),
**caractérisée en ce que**
le dispositif de commande (18) comporte un raccord d'entrée pour une valeur de consigne de la tension à délivrer, un régulateur complémentaire (7) étant prévu à l'entrée duquel la valeur de consigne de la tension à délivrer est appliquée et à la sortie duquel des valeurs de consigne de puissance réactive sont émises et appliquées à la commande de convertisseur (189), la tension effectivement délivrée par l'installation à énergie éolienne étant saisie au moyen d'un capteur (67) et le régulateur complémentaire (7) étant conçu pour calculer les valeurs de consigne de puissance réactive à partir de la différence entre la valeur de consigne de la tension à délivrer (Usoll) et la tension effectivement délivrée par l'installation à énergie éolienne.

2. Installation à énergie éolienne selon la revendication 1,
**caractérisée en ce que**
le régulateur complémentaire (7) présente une structure de régulateur à plusieurs voies.

3. Installation à énergie éolienne selon la revendication 2,
**caractérisée en ce que**
une voie plus lente (71) est prévue avec un filtre passe-bas (72), et une voie plus rapide (74) avec un filtre passe-haut (75).

4. Installation à énergie éolienne selon la revendication 3,
**caractérisée en ce que**
la voie plus rapide (74) comporte un dispositif de réjection des transitoires (76).

5. Installation à énergie éolienne selon la revendication 3 ou 4,
**caractérisée en ce que**
la voie plus lente (71) est pourvue d'un module statique de tension (73) sur lequel la valeur de consigne de la tension à délivrer est appliquée et qui émet de préférence une valeur de consigne de puissance réactive suivant une courbe caractéristique.

6. Installation à énergie éolienne selon l'une des revendications précédentes,
**caractérisée en ce que**
le point de jonction (69) est raccordé à un réseau de distribution à haute tension (9) et relié à l'installation à énergie éolienne (1) via un transformateur à haute tension (66), un dispositif de mesure de haute tension (67') étant prévu.

7. Installation à énergie éolienne selon la revendication 6,
**caractérisée en ce que**
le dispositif de mesure (67) est exécuté avec un capteur (67) sur le côté du transformateur à haute tension (66) vers l'installation à énergie éolienne, et un dispositif de calcul déterminant la tension sur le point de jonction (69) à partir de données de mesure du capteur (67) et de données électriques caractéristiques du transformateur à haute tension (66) et du trajet de connexion (6).

8. Installation à énergie éolienne selon l'une des revendications précédentes,
**caractérisée en ce que**
un dispositif limiteur (182) est prévu sur le régulateur complémentaire (7), lequel limite à une valeur maximale des valeurs de consigne trop élevées pour la tension à délivrer.

9. Installation à énergie éolienne selon l'une des revendications précédentes,
**caractérisée en ce que**
il est prévu un circuit d'asservissement (88) superposé au régulateur complémentaire, lequel est conçu pour déterminer une valeur de consigne de la tension à délivrer (Usoll) pour le réglage d'un coefficient de puissance global de la puissance délivrée au réseau de distribution (9), et à transmettre celle-ci sous forme de signal à l'installation à énergie éolienne (1) via des lignes de communication (89).

10. Procédé d'exploitation d'une installation à énergie éolienne comprenant un rotor (10), un générateur entraîné par celui-ci avec un convertisseur (17), destinée à l'alimentation en courant électrique d'un réseau de distribution électrique (9) via un point de jonction (69), et un dispositif de commande (18), ledit dispositif de commande (18) comportant une commande de convertisseur (189),
**caractérisé par**
les étapes d'application sur le dispositif de commande (18) d'une valeur de consigne pour la tension à délivrer, d'application de la valeur de consigne de la tension à délivrer (Usoll) sur un régulateur complémentaire (7), de calcul de valeurs de consigne de puissance réactive à partir de la différence entre la valeur de consigne de la tension à délivrer et la tension effectivement délivrée par l'installation à énergie éolienne (1), et de transmission de la valeur de consigne de puissance réactive à la commande de convertisseur (189).

11. Procédé selon la revendication 10,
**caractérisé par**
l'utilisation d'une installation à énergie éolienne selon les revendications 1 à 10.
